# FASCICULE DE BREVET EUROPEEN

(11) **EP 2 033 714 B1**
(45) Date de publication et mention de la délivrance du brevet: **15.08.2012**
(21) Numéro de dépôt: 08290817.9
(22) Date de dépôt: 29.08.2008
(51) Int. Cl.: B03B 9/06

(54) **Méthode et installation de recyclage des cartouches d'encre**
Verfahren und Vorrichtung zum Recycling von Tintenpatronen
Method and installation for the recycling of ink-cartridges

(30) Priorité: 30.08.2007 FR 0706079
(43) Date de publication de la demande: 11.03.2009
(73) Titulaire: Toshiba TEC Europe Imaging Systems S.A., 76378 Neuville Les Dieppe (FR); Kabushiki Kaisha Toshiba, Minato-ku Tokyo 105-8001 (JP); Toshiba TEC Kabushiki Kaisha, Tokyo 141-8664 (JP)
(72) Inventeur: Mebtoul, Mohamed, 76200 Dieppe (FR); Michel, Claude, 76270 Bully (FR); Fujikura, Yukihiro, 411-8520 Shizuoka-ken (JP)
(74) Mandataire: Bertrand, Didier

(56) Documents cités:
- EP-A- 0 972 570
- EP-A- 1 020 224
- EP-A- 1 055 500
- EP-A- 1 424 144
- DE-A1- 19 821 545

## Description

La présente invention se rapporte à une méthode et à une installation de recyclage des cartouches d'encre pulvérulente adaptées aux systèmes d'impression, pour en séparer les différentes parties constitutives.

On connaît déjà des méthodes et des installations de recyclage de matières plastiques, par exemple des bouteilles en plastique, lesquelles présentent généralement un corps transparent et déformable en polyéthylène téréphtalate et un bouchon plus rigide en polyéthylène haute densité. Après usage et collecte, ces bouteilles sont triées et compactées pour ensuite être acheminées vers des installations de régénération où elles sont broyées et réduites en paillettes. Ces paillettes pourront ensuite être réutilisées pour former de nouveaux produits.

On connaît également des méthodes de recyclage et des installations pour les mettre en oeuvre, qui permettent de récupérer les matériaux plastiques des cartouches d'encre. Ces méthodes comprennent tout d'abord une étape de broyage des cartouches, après laquelle l'encre pulvérulente notamment, est collectée par aspiration. Les matériaux métalliques sont eux séparés durant une étape d'attraction magnétique, tandis qu'une autre étape d'écrasement et de broyage permet de récupérer des éléments métalliques ferreux ou à base d'aluminium.

On pourra notamment se référer au document EP 1 430 960 dans lequel il est écrit une installation permettant la mise en oeuvre d'une telle méthode. Cependant, elle est destinée plus particulièrement à la récupération des matériaux métalliques, qu'elle est adaptée à extraire, débarrassés de toute autre matériau.

Cette méthode est en réalité bien adaptée aux cartouches d'encre pulvérulente pour système d'impression contenant une grande quantité de matériaux métalliques et en particulier des matériaux ferromagnétiques. En revanche, pour les cartouches réalisées essentiellement en matière plastique, elle ne permet pas de séparer précisément les différents éléments qui les constituent et ainsi, de recueillir une matière plastique suffisamment pure ou propre pour pouvoir être réutilisée, après une éventuelle régénération, dans une presse à injection ou à souffler par exemple, et de la sorte être recyclée aisément.

Une autre méthode de recyclage des cartouches d'encre selon le préambule de la revendication 1 ainsi qu'une installation pour la mise en oeuvre de la méthode est décrite dans le document EP 1 424 144 A.

Aussi, un problème qui se pose et que vise à résoudre la présente invention, est de fournir notamment une méthode de recyclage des cartouches d'encre pour système d'impression qui permette de récupérer directement les matières plastiques qui les constituent avec un degré de pureté suffisamment grand pour que ces dernières puissent ensuite être directement réutilisées.

Dans le but de résoudre ce problème, la présente invention propose, selon un premier objet, une méthode de recyclage des cartouches d'encre pour système d'impression , lesdites cartouches d'encre comprenant un carter, un réservoir pour stocker de l'encre pulvérulente et des pièces mécaniques, ledit carter et ledit réservoir comportant des éléments en matière plastique, conformément à la méthode, on traite lesdites cartouches d'encre selon une première et une deuxième étapes de broyage pour récupérer d'un côté lesdits éléments en matière plastique et d'un autre côté l'encre pulvérulente et les pièces mécaniques ; et, on récupère, après la première étape de broyage, un premier broyat desdits éléments en matière plastique susceptible de contenir un résidu d'encre pulvérulente ; selon l'invention, on broie ledit premier broyat selon ladite deuxième étape de broyage pour former un second broyat contenant ledit résidu d'encre pulvérulente ; et, on porte ledit second broyat à travers un courant gazeux pour séparer ledit second broyat dudit résidu d'encre pulvérulente.

Ainsi, une caractéristique de l'invention réside à la fois dans la mise en oeuvre successive d'un premier et d'un second broyage, et dans la mise en oeuvre d'un courant gazeux appliqué aux produits issus du second broyage, le second broyat, pour pouvoir y retirer notamment le résidu d'encre pulvérulente. De la sorte, contrairement aux dispositifs et installations de l'art antérieur, selon lesquels le second broyage est appliqué à des éléments de cartouches d'encre incluant essentiellement des parties métalliques, afin de mieux en extraire ces parties métalliques, selon l'objet de la présente invention, l'objet du premier broyage est de déchiqueter les cartouches d'encre pour pouvoir récupérer les matériaux plastiques, ou premier broyat, débarrassés de parties mécaniques incluant des éléments métalliques et de l'essentiel de l'encre pulvérulente pour ensuite broyer ce premier broyat de manière à obtenir des particules de matériaux plastiques plus fines, le second broyat. Ce second broyat est ensuite débarrassé du résidu d'encre pulvérulente et des déchets d'étiquettes au moyen du courant gazeux.

Selon un mode de mise en oeuvre de l'invention particulièrement avantageux, on porte ledit second broyat vers une zone surélevée, ledit second broyat étant entraîné verticalement par gravité depuis ladite zone surélevée vers une zone de réception située sensiblement au droit de ladite zone surélevée. Avantageusement, durant la chute du second broyat de la zone surélevée vers la zone de réception, on le guide alternativement selon des directions transversales, entre ladite zone surélevée et ladite zone de réception pour provoquer la friction des particules de matériaux plastiques entre elles et ainsi, détacher ledit résidu d'encre pulvérulente dudit second broyat.

Selon un mode particulier de réalisation, on oriente ledit courant gazeux à contre-courant dudit second broyat, de façon à entraîner le résidu d'encre pulvérulente, et aussi les éléments de plus faible densité que le matériau plastique, par exemple des lambeaux d'étiquette collée sur les cartouches d'encre, pour pouvoir les extraire au niveau de la zone surélevée.

Avantageusement on porte ledit second broyat à travers un courant gazeux orienté à contre-courant dudit second broyat, entre ladite zone de réception et ladite zone surélevée. De la sorte, entre ladite zone de réception et ladite zone surélevée, où le résidu d'encre pulvérulente se détache dudit broyat grâce aux chocs des particules de matériaux plastiques entre elles, le courant gazeux est pleinement efficace, puisqu'il se charge simplement en résidu d'encre pulvérulente. En outre, ce courant gazeux s'enrichi en résidu d'encre à mesure qu'il remonte le courant dudit second broyat.

De manière préférée, on guide ledit courant gazeux alternativement selon des directions transversales et dans un sens opposé audit second broyat de manière à provoquer le croisement du courant dudit second broyat et dudit courant gazeux. Ainsi, le second broyat s'écoule verticalement en descendant selon une courbe sensiblement sinusoïdale, tandis que le courant gazeux ascendant décrit aussi une courbe sinusoïdale, mais en opposition de phase avec celle du second broyat. De la sorte, le courant provoque également le détachement du résidu d'encre des particules de matériaux plastiques et ce, d'une manière plus efficace.

Pour orienter ledit courant gazeux, on créer avantageusement une dépression dans ladite zone surélevée pour provoquer la formation d'un courant d'air formant ledit courant gazeux. De la sorte, l'air situé au voisinage de la zone de réception est aspiré et s'écoule alors à contre-courant à travers le second broyat en entraînant le résidu d'encre pulvérulente notamment, pour être extrait ensuite au niveau de la zone surélevée et pour récupérer, en la filtrant, ledit résidu d'encre.

De manière préférentielle, on crible lesdites cartouches d'encre traitées après ladite première étape de broyage, dans laquelle les cartouches d'encre sont plus précisément déchiquetées pour que les éléments métalliques qu'elles contiennent, par exemple les ressorts, puissent s'en détacher. Ensuite le criblage permet d'évacuer l'essentiel de l'encre pulvérulente, pour récupérer ledit premier broyat, qui lui contient des parties métalliques ferromagnétiques. Ces éléments métalliques des parties mécaniques, sont extraits dudit premier broyat par aimantation avant ladite seconde étape de broyage.

Selon un mode préféré de mise en oeuvre de l'invention, lesdites pièces mécaniques incluent des éléments métalliques représentant entre 2 et 10% du poids total de ladite cartouche d'encre contrairement aux cartouches d'encre recyclées selon l'art antérieur, qui elles, contiennent plus de 50% en poids d'éléments métalliques. Et d'ailleurs, l'objet de la présente invention vise à récupérer les matières plastiques des cartouches d'encre sous une forme débarrassée d'impureté pour pouvoir les réutiliser, et si les cartouches d'encre traitées conformément à la méthode objet de l'invention, renferment un pourcentage de matières plastiques inférieur à 80%, l'opération de recyclage n'est économiquement pas rentable.

Les procédés selon l'art antérieur visent au traitement des cartouches d'encre incluant au moins 50% en poids d'éléments métalliques, essentiellement pour en récupérer le métal.

Selon un second aspect, l'invention propose une installation de recyclage des cartouches d'encre pour système d'impression, lesdites cartouches d'encre comprenant un carter, un réservoir pour stocker de l'encre pulvérulente et des pièces mécaniques, ledit carter et ledit réservoir comportant des éléments en matière plastique, ladite installation comportant d'une part, des moyens pour traiter lesdites cartouches d'encre selon une première et une deuxième étapes de broyage pour récupérer d'un côté lesdits éléments en matière plastique et d'un autre côté l'encre pulvérulente et les pièces mécaniques et d'autre part, des moyens pour récupérer, après la première étape de broyage, un premier broyat desdits éléments en matière plastique susceptible de contenir un résidu d'encre pulvérulente ; selon l'invention, lesdits moyens pour traiter lesdites cartouches d'encre comprennent : des moyens pour broyer ledit premier broyat selon ladite deuxième étape de broyage de façon à former un second broyat contenant ledit résidu d'encre pulvérulente ; et, des moyens pour porter ledit second broyat à travers un courant gazeux de façon à séparer ledit second broyat dudit résidu d'encre pulvérulente.

Ainsi, une autre caractéristique de l'invention réside non seulement dans les moyens de broyage, parmi lesquels les premiers déchiquettent à basse vitesse les cartouches d'encre, sans risque d'interférer avec les éléments métalliques ce qui risqueraient de provoquer des étincelles, tandis que les seconds moyens de broyage, à plus haute vitesse, broient les matériaux plastiques en fines particules, mais aussi dans les moyens pour produire un courant gazeux à travers ces fines particules de matériaux plastiques constituant le second broyat, de manière à en retirer les résidus d'encre pulvérulente et les déchets divers telles les étiquettes.

Avantageusement, lesdits moyens pour porter ledit second broyat à travers un courant gazeux, comprennent un conduit orienté sensiblement verticalement, ledit conduit présentant une entrée supérieure située au-dessus d'une sortie inférieure, ledit second broyat étant introduit à travers ladite ouverture supérieure, par exemple au moyen d'un cyclone comme on l'expliquera ci-après plus en détail, de façon à être entraîné verticalement par gravité vers ladite sortie inférieure. Par ailleurs, de façon particulièrement avantageuse, ledit conduit est équipé de chicanes entre ladite entrée supérieure et ladite sortie inférieure, lesquelles chicanes sont orientées d'un angle compris entre 25 et 50° par rapport à la verticale, par exemple orientées sensiblement à 45° par rapport à la verticale et disposées en regard les unes des autres, pour guider ledit second broyat alternativement selon des directions transversales et par là même provoquer la friction des particules du second broyat, de façon à en détacher ledit résidu d'encre pulvérulente.

Selon un mode de réalisation particulièrement avantageux, l'installation comprend des moyens d'aspiration situés au-dessus de ladite entrée supérieure, par exemple montés sur le cyclone précité, pour créer une dépression apte à provoquer la formation d'un courant d'air prenant naissance à ladite sortie inférieure et s'écoulant vers ladite entrée supérieure, ledit courant d'air formant ledit courant gazeux. Une telle installation est énergétiquement plus avantageuse par rapport à une installation incorporant, non pas des moyens d'aspirations, mais des moyens de soufflage situés au niveau de ladite sortie inférieure. Et au surplus, elle permets une meilleures séparations du résidu et des particules.

Selon un mode de réalisation particulièrement avantageux, le conduit équipé de chicanes, ou passage en chicanes, comporte une succession de cylindres de forme parallélépipédique, lesdits cylindres définis par leur génératrice, sont inclinés successivement les uns des autres d'un angle voisin de 120°. De plus, le rapport de la longueur sur la largeur de la section droite rectangulaire des cylindres est inférieur ou égal à 3,5. De la sorte, le courant de second broyat qui s'écoule dans le conduit se répartit sur toute la largeur du conduit, tandis que le courant gazeux traverse, à contre-courant, le courant de second broyat. On observera que grâce à cette configuration, et ce pour un taux de charge de 0,6, le second broyat s'écoule par gravité contre la surface interne inférieure des cylindres précités, en laissant un espace libre entre le courant de second broyat est la surface interne supérieure des cylindres correspondant, et dans cet espace libre circule le courant gazeux. Ainsi, à chaque transition, lorsque le courant de second broyat s'écoule d'un cylindre à l'autre, le courant gazeux le traverse et entraîne le résidu d'encre. Avantageusement, lesdits cylindres présentent une section droite rectangulaire, d'une longueur comprise entre 225 et 230 mm et d'une largeur comprise entre 70 et 80 mm.

De plus, lesdits moyens pour traiter lesdites cartouches d'encre selon la première étape de broyage comprennent deux arbres montés à rotation et à distance l'un de l'autre de façon sensiblement parallèle, lesdits arbres présentant respectivement une pluralité de dents formant couteaux, les dents des deux arbres étant adaptées à se croiser entre les arbres pour broyer lesdites cartouches d'encre lorsque lesdites cartouches d'encre sont entraînées entre lesdits arbres. Ainsi, la paire d'arbres est installée horizontalement et ils sont entraînés dans des sens de rotation inverses de façon que les dents soient entraînées les unes vers les autres, dans la partie supérieure située au-dessus des arbres pour s'écarter ensuite en-dessous de la paire d'arbre. De la sorte, les cartouches d'encre sont attrapées, dans la partie supérieure, par les dents convergentes et elles sont entraînées à force entre les arbres où elles sont broyées.

En outre, lesdites pièces mécaniques comportant des éléments métalliques, ladite installation comprend des moyens formant aimant, par exemple un électro-aimant, pour extraire par aimantation lesdits éléments métalliques dudit premier broyat avant ladite seconde étape de broyage.

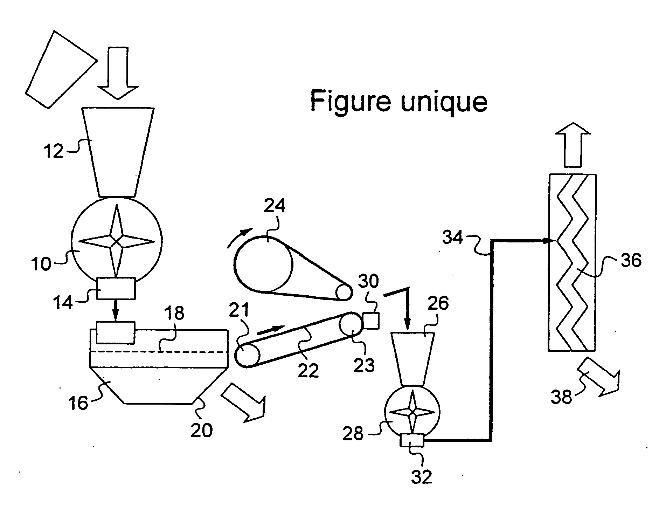

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- l'unique Figure est une vue schématique d'une installation de recyclage de cartouches d'encre mettant en oeuvre une méthode conforme à l'invention.

L'unique Figure illustre une installation apte au traitement et au recyclage des cartouches d'encre pour système d'impression du type imprimante de bureaux par exemple, pour en séparer les matériaux plastiques de type polymère des éléments métalliques, et transformer lesdits matériaux plastiques en particules relativement propres pouvant, par exemple, entrer ensuite dans la formulation de compound destiné à l'injection plastique.

On entendra par cartouche d'encre, aussi bien les dispositifs relativement complexes incluant à la fois la réserve d'encre, ou toner, sous forme pulvérulente, et un mécanisme de traitement et de transfert de cette encre dans le réservoir développeur de l'appareil d'impression, que les réservoirs d'encre comportant essentiellement une bouteille dans laquelle est stockée l'encre pulvérulente. Ces réservoirs d'encre, communément appelés bidons, essentiellement en matière plastique, incluent des éléments en polyéthylène basse densité par exemple et/ou en polypropylène ou bien encore en polystyrène injecté, et ils sont également équipés de pièces mécaniques permettant leur adaptation sur une imprimante. Ces cartouches d'encre comportent généralement des éléments métalliques, et en particulier les pièces mécaniques, tels des ressorts par exemple, qu'il convient bien évidemment d'extraire pour ne récupérer que les éléments en matière plastique. Les éléments métalliques peuvent représenter de quelques pourcent à plus de 10 % du poids total de la cartouche. Au surplus, ces cartouches d'encre à recycler contiennent encore, soit de très faible quantité d'encre pulvérulente, moins de 5 % du poids total de la cartouche, lorsque la cartouche est a priori vide et qu'elle a été remplacée dans l'imprimante par une cartouche pleine, c'est le cas de la majorité des cartouches d'encre recyclées, soit des quantités substantielles d'encre pulvérulente, plus de 50 % du poids total de la cartouche, lorsqu'il s'agit de recycler des vieilles cartouches non réutilisables ou bien encore, lorsque la cartouche d'encre d'une imprimante a été indûment remplacée par une nouvelle cartouche au cours d'une avarie sur l'imprimante. Par conséquent, il convient lors du recyclage de récupérer non seulement les éléments métalliques mais aussi l'encre pulvérulente ou toner.

Ainsi, l'installation représentée sur la figure comporte un premier broyeur 10 surmonté d'une trémie réceptrice ou de réception 12, laquelle reçoit des cartouches d'encre à recycler. Ce premier broyeur 10 est un broyeur rotatif fonctionnant à basse vitesse, avec un couple de forces élevé de manière à disloquer et déchiqueter les cartouches d'encre.

Ce premier broyeur 10 est destiné à « déchirer » les cartouches, aussi il comporte des couteaux montés sur un arbre rotatif et disposés en peigne de manière à croiser des contre-couteaux disposés en peigne également et montés en position fixe dans le corps du broyeur 10.

De la sorte, les éléments métalliques sont libérés des pièces mécaniques des cartouches, sans pour autant que les forces de friction exercées par le broyeur sur ces éléments métalliques n'aient provoqué des étincelles ou un échauffement qui auraient pu faire fondre la matière plastique. Au surplus, bien que l'espace de la zone de broyage du broyeur 10 et l'espace délimité par la trémie de réception 12, soient confinés et assortis de carters de protection, compte tenu du fonctionnement du broyeur 10 à basse vitesse, le risque de projection d'éléments déchiquetés est nul. Ainsi, l'installation ne présente aucun risque pour les opérateurs qui alimentent la trémie réceptrice 12 par l'intermédiaire d'une bande transporteuse notamment.

Selon un autre mode de mise en oeuvre non représenté, le premier broyeur comprend deux arbres montés à rotation et à distance l'un de l'autre de façon sensiblement parallèle et en définissant un plan horizontal. Les deux arbres sont adaptés à être entraînés en rotation dans des sens opposés l'un de l'autre, et ils sont respectivement équipés d'une pluralité de dents formant couteaux. Les dents des deux arbres sont adaptées à se croiser entre les arbres pour venir happer les cartouches d'encre situées au-dessus des deux arbres et les entraîner à force entre les deux arbres pour les déchiqueter.

Avantageusement, les dents sont réalisées au moyen d'un élément de base constitué d'un flasque, lequel présente une épaisseur voisine de 2 cm, par exemple 1,8 cm. Ce flasque présente une partie centrale sensiblement carrée dans lequel est pratiqué au centre un orifice cannelé et formant moyeu, et quatre dents prolongeant respectivement les quatre bords dans les quatre coins de ladite partie carrée. La partie centrale carrée présente des côtés d'une longueur de 15 cm par exemple, tandis que les dents s'étendent de ladite partie centrale carrée sur une longueur voisine de 10 cm. Ces quatre dents s'étendent respectivement dans le prolongement d'un bord de ladite partie carrée et en saillie perpendiculaire du bord contigu pour être successivement perpendiculaires les unes par rapport aux autres. Aussi, ces dents sont-elles inclinées, dans un même sens, en vue de face du flasque et d'un angle moyen de 45° environ par rapport au rayon du flasque coupant l'orifice et passant par le coin de la partie carrée.

En outre, la tranche interne des dents, orientée vers le bord contigu, est taillée pour former une arête tranchante. Avantageusement, l'arête tranchante présente deux parties dans le prolongement l'une de l'autre et inclinées l'une par rapport à l'autre.

Ainsi, tout d'abord, les flasques sont installés sur des arbres cannelés, de manière à être liés en rotation à ces arbres. Un jeu de flasques est engagé sur un arbre de manière à ce que les dents des flasques soient orientées dans un même sens et à ce que les flasques soient successivement décalés en rotation de 45°. En outre, les flasques sont séparés sur un même arbre par des entretoises pour maintenir les dents, selon une direction parallèle à l'arbre, à une distance comprise entre 6 et 10 cm, par exemple 8 cm. On observera que ces entretoises forment un manchon cylindrique autour de l'arbre d'un diamètre externe voisin de 10 cm.

Ensuite, les deux arbres équipés de leurs flasques sont ajustées parallèlement l'un par rapport à l'autre, à une distance comprise entre 20 et 26 cm, par exemple 23 cm, et de manière décalée axialement pour que les dents des flasques des arbres s'entrecroisent à égale distance les unes des autres. De la sorte, et compte tenu des dimensions précitées, les dents se croisent à des distances voisines de 3 cm, par exemple 2,8 cm. Au surplus, les deux arbres sont respectivement équipés, à l'une de leurs extrémités voisines, de deux roues dentées identiques engrenant l'une dans l'autre en formant un engrenage parallèle. Les deux arbres sont ainsi destinés à être installés sensiblement horizontalement. Ils sont alors entraînés en rotation dans des sens opposés l'un de l'autre, de façon que les dents, respectivement des deux jeux de flasques convergent les unes vers les autres dans la partie supérieure située au-dessus des deux arbres horizontaux pour diverger en dessous dans la partie inférieure. En outre, les arbres sont entraînés en rotation à une vitesse comprise entre 0,5 et 1 tour par seconde de manière à ce que, compte tenu de la géométrie et de la dimension des dents, l'extrémité libre des dents soit entraînée en mouvement à une vitesse linéaire comprise entre 0,55 et 1,1 mètre par seconde.

Par ailleurs, les flasques des deux jeux respectivement montés sur les deux arbres sont orientés de manière à ce que les dents des deux jeux de flasques soient respectivement orientées dans des sens opposés l'un de l'autre. Ainsi, les dents des flasques sont inclinées, par rapport à un rayon coupant leur arbre respectif, vers le sens de rotation.

De plus, les deux arbres sont décalés angulairement, l'un par rapport à l'autre, de manière à ce que lorsque les dents des deux jeux de flasques convergent les unes vers les autres au cours de la rotation et dans la partie supérieure, chacune des dents d'un jeu de flasques s'engagent angulairement entre deux dents les plus proches du jeu de flasques de l'autre arbre.

Ainsi, grâce à une géométrie de dents particulière et une vitesse des arbres relativement lente, moins de un tour par seconde, les cartouches d'encre sont déchiquetées sans risques d'échauffement, ni de formation d'étincelle, ce qui permet d'éviter les explosions dues aux poussières.

Quel que soit le mode de mise en oeuvre, on obtient par les procédés décrit ci-dessus un premier broyat dont les lambeaux présente une taille maximale inférieure à 10 cm, par exemple inférieure à 6 cm.

Le premier broyeur 10 présente une première sortie 14 qui débouche au-dessus d'un cribleur 16. Ce cribleur 16 présente, dans une partie supérieure, un tamis 18 à mailles fines et dans une partie inférieure, une trémie de confinement 20. Par ailleurs, la partie supérieure du cribleur 16 et la sortie 14 du broyeur 10 sont reliées ensemble de manière relativement étanche, afin de confiner l'ensemble des éléments déchiquetés et surtout, l'encre pulvérulente. Ainsi, les cartouches d'encre déchiquetées, formant un premier broyat et sortant par la sortie 14 du broyeur 10 constituent un ensemble comprenant de l'encre pulvérulente libre, des éléments métalliques libérés et des éléments en matière plastique en lambeaux susceptibles d'être recouvert d'une fine couche d'encre pulvérulente. Cet ensemble s'achemine par gravité sur le tamis 18 à travers lequel s'écoule l'encre pulvérulente libre. En revanche, l'encre pulvérulente qui recouvre les lambeaux d'éléments en matière plastique, ne s'en détache pas à ce stade du recyclage.

Les éléments en matière plastique et les éléments métalliques qui demeurent sur le tamis 18 sont alors repris par une bande transporteuse 22, laquelle s'étend entre une extrémité de réception 21 et une extrémité de libération 23 et est surmontée d'un puissant électro-aimant 24. Cet électro-aimant 24 constitue un séparateur magnétique qui attire alors les éléments métalliques véhiculés sur la bande de transporteuses 22. Ainsi, les lambeaux d'éléments en matière plastique, encore recouvert d'une couche d'encre pulvérulente, sont-ils débarrassés des éléments métalliques et en particulier des ressorts contenus dans les cartouches d'encre.

La bande transporteuse 22 s'étend à partir du tamis 18, selon une légère pente, vers une trémie de transition 26 qui alimente un second broyeur 28. En outre, un électro-aimant de sécurité 30 installé au voisinage de l'extrémité de libération 23 de la bande transporteuse 22 permet d'attirer les éléments métalliques résiduels qui n'auraient pas été extraits par le puissant électro-aimant 24.

Par conséquent, la bande transporteuse 22 achemine les lambeaux d'éléments en matière plastique dans la trémie de transition 26, lesquels lambeaux sont ensuite broyés dans le second broyeur 28. Ce second broyeur 28 est un broyeur rotatif à couteaux fonctionnant à haute vitesse pour broyer plus finement les lambeaux d'éléments en matière plastique renfermant encore de l'encre pulvérulente et obtenir ainsi des particules recouvertes d'encre, lesquelles forment alors un second broyat.

Le second broyeur 28 présente une seconde sortie 32 vers laquelle s'achemine le second broyat, ce dernier étant alors repris par aspiration à travers un conduit 34 pour être entraînés dans un cyclone non représenté. Le cyclone, de forme sensiblement tronconique, présente dans sa partie supérieure de grand diamètre, une entrée sensiblement tangentielle au cyclone, une sortie supérieure axiale équipée d'un ensemble d'aspiration dans la partie supérieure, et une sortie inférieure axiale dans la partie inférieure.

Cette sortie inférieure axiale se prolonge par une gaine verticale équipée d'un passage en chicane 36, lequel passage en chicane 36 se termine par une zone de réception inférieure 38.

Ainsi, grâce à l'ensemble d'aspiration qui permet de créer une dépression au niveau de la sortie supérieure axiale du cyclone, un courant gazeux, et plus précisément un courant d'air est généré dans le passage en chicane 36 puis dans le cyclone, l'air étant aspiré au niveau de la zone de réception inférieure 38, remonte dans le passage en chicane 36 puis dans le cyclone pour être extrait au niveau de la sortie supérieure axiale du cyclone.

De la sorte, le second broyat constitué de particules en matière plastique recouvertes d'encre pulvérulente et repris par aspiration est délivré dans le cyclone. Par gravité, les particules en matière plastique s'acheminent à travers la sortie inférieure axiale du cyclone puis traverse le passage en chicane 36. À contre-courant de ce flux gravitaire de particules, l'air qui s'écoule dans le passage en chicane 36 puis dans le cyclone, entraîne les éléments les moins denses et spécifiquement, l'encre pulvérulente. Sont également entraînés à contre-courant, les morceaux d'étiquette qui recouvrent usuellement certaines parties des cartouches d'encre. Grâce au passage en chicane 36, les particules d'éléments en matière plastique, sont entraînées en friction les unes contre les autres et aussi contre les parois des chicanes, de telle sorte que l'encre pulvérulente tend à s'en détacher. Cette encre pulvérulente est alors entraînée ascensionnellement par le courant d'air.

Ainsi, on obtient dans la zone de réception inférieure 38, des particules en matière plastique, généralement d'un même type de matière plastique, débarrassées de tout résidu d'encre pulvérulente. Ces particules peuvent alors être recyclées aisément.

Selon un mode de mise en oeuvre particulier de l'invention, les particules de matière plastique du second broyat délivrées dans le cyclone présentent des dimensions spécifiques et sont recouvertes ou souillés par les plus fines particules d'encre pulvérulente dont le diamètre varie par exemple entre 1 et 100 microns. La densité de l'encre pulvérulente est d'environ 0,8. Les particules de matière plastique, d'une densité voisine de 1,1 par exemple pour le polystyrène, présentent des dimensions comprises, par exemple, entre 0,5 et 10 mm. Par ailleurs, les résidus éventuels de papier qui représentent moins de 1 % du second broyat, présentent généralement des dimensions comprises entre 0,5 et 5 mm. La densité du papier est, elle, voisine de 0,72. En outre, l'encre pulvérulente représente par exemple, entre 5 et 75 % du second broyat.

Aussi, le passage en chicane 36 présente des caractéristiques structurelles particulières, non seulement en rapport avec les caractéristiques intrinsèques des particules mais aussi avec le flux gravitaire de particules et le débit du courant gazeux.

Ainsi, selon le mode de mise en oeuvre particulier précité, le passage en chicane comporte une succession de cylindres de forme parallélépipédique, et inclinés successivement les uns des autres d'un angle voisin de 120°. Ces cylindres présentent une section droite rectangulaire, d'une longueur comprise entre 225 et 230 mm, par exemple 227,7 mm et d'une largeur comprise entre 70 et 80 mm, par exemple 75,044 mm. Aussi, le passage en chicane s'étendant longitudinalement selon un axe vertical, les cylindres sont raccordés entre eux en définissant une section de raccordement rectangulaire perpendiculaires audit axe verticale. Cette section de raccordement présente une longueur correspondant à la longueur de leur section droite et une largeur, compte tenu de l'angle de 120° des cylindres entre eux, comprise entre 81 et 92 mm, 86,5 mm selon l'exemple précité. Par ailleurs, la longueur des arêtes des cylindres, selon la direction de leurs génératrices, est comprise entre 120 et 140 mm et adaptée de manière à être sensiblement égal à 1,5 fois la largeur de ladite section de raccordement. Ainsi, la longueur des arêtes des cylindres est voisine de 130 mm selon l'exemple précité.

Au surplus, afin d'obtenir un écoulement homogène dans le passage de chicanes, le rapport de la longueur sur la largeur de la section droite des cylindres est inférieur ou égal à 3,5.

Par ailleurs, le passage de chicanes présente avantageusement sept chicanes successives, d'une longueur totale voisine de 1,5 mètre et le second broyat est introduit, en partant du haut du passage de chicanes, entre la deuxième et la troisième chicane. Ainsi, l'installation de recyclage est relativement compacte, homogène, et d'une hauteur limitée sensiblement à deux mètres, ce qui lui permet d'être installée aisément sur une plateforme mobile du type semi-remorque. Ce véhicule alors équipé de ladite installation est itinérant et peut être conduit successivement auprès de différents centres de tri pour traiter les cartouches collectées.

S'agissant maintenant des caractéristiques d'écoulement, la vitesse de l'air à travers ce passage de chicanes est compris entre 4,5 et 7 m/s, par exemple 6 m/s, tandis que le flux du second broyat est de 150 kg/h. Ces caractéristiques d'écoulement, en tenant compte des caractéristiques structurelles du passage de chicanes, correspondent à un taux de charge inférieur à 0,6. Le flux d'air est avantageusement provoqué en produisant une dépression en amont du passage de chicanes, par rapport au sens descendant d'écoulement du flux gravitaire, ce qui est énergétiquement moins coûteux qu'une surpression provoquée en aval. Cette dépression est produite par aspiration, par exemple au moyen d'une hélice tournante.

De la sorte, et selon l'exemple considéré, les particules de matière plastique sont débarrassées à la fois des particules de toner et des résidus de papier. On observera par ailleurs, que la vitesse de l'air dans le passage de chicanes doit être voisin de 6m/s pour entraîner les résidus de papier de manière satisfaisante.

## Revendications

1. Méthode de recyclage des cartouches d'encre pour système d'impression, lesdites cartouches d'encre comprenant un carter, un réservoir pour stocker de l'encre pulvérulente et des pièces mécaniques, ledit carter et ledit réservoir comportant des éléments en matière plastique, ladite méthode étant du type selon laquelle :
- on traite lesdites cartouches d'encre selon une première et une deuxième étapes de broyage pour récupérer d'un côté lesdits éléments en matière plastique et d'un autre côté l'encre pulvérulente et les pièces mécaniques ; et,
- on récupère, après la première étape de broyage, un premier broyat desdits éléments en matière plastique susceptible de contenir un résidu d'encre pulvérulente ;
- on broie ledit premier broyat selon ladite deuxième étape de broyage pour former un second broyat contenant ledit résidu d'encre pulvérulente ;
**caractérisée en ce qu'**on porte ledit second broyat vers une zone surélevée, ledit second broyat étant entraîné verticalement par gravité depuis ladite zone surélevée vers une zone de réception, et on guide ledit second broyat alternativement selon des directions transversales, entre ladite zone surélevée et ladite zone de réception pour détacher ledit résidu d'encre pulvérulente dudit second broyat, tandis qu'on porte ledit second broyat à travers un courant gazeux orienté à contre-courant dudit second broyat pour séparer ledit second broyat dudit résidu d'encre pulvérulente.

2. Méthode de recyclage selon la revendication 1, **caractérisée en ce qu'**on porte ledit second broyat à travers un courant gazeux orienté à contre-courant dudit second broyat entre ladite zone de réception et ladite zone surélevée.

3. Méthode de recyclage selon la revendication 1 ou 2, **caractérisée en ce qu'**on guide ledit courant gazeux alternativement selon des directions transversales et dans un sens opposé audit second broyat de manière à provoquer le croisement du courant dudit second broyat et dudit courant gazeux.

4. Méthode de recyclage selon l'une quelconque des revendications 1 à 3, **caractérisée en ce que** lesdites pièces mécaniques incluent des éléments métalliques représentant entre 2 et 10% du poids total de ladite cartouche d'encre.

5. Méthode de recyclage selon l'une quelconque des revendications 1 à 4, **caractérisée en ce qu'**on créer une dépression dans ladite zone surélevée pour provoquer la formation d'un courant d'air formant ledit courant gazeux.

6. Méthode de recyclage selon l'une quelconque des revendications 1 à 5, **caractérisée en ce qu'**on crible lesdites cartouches d'encre traitées après ladite première étape de broyage pour récupérer ledit premier broyat.

7. Méthode de recyclage selon l'une quelconque des revendications 1 à 6, **caractérisée en ce que**, lesdites pièces mécaniques comportant des éléments métalliques, on extrait par aimantation lesdits éléments métalliques dudit premier broyat avant ladite seconde étape de broyage.

8. Installation de recyclage des cartouches d'encre pour système d'impression, lesdites cartouches d'encre comprenant un carter, un réservoir pour stocker de l'encre pulvérulente et des pièces mécaniques, ledit carter et ledit réservoir comportant des éléments en matière plastique, ladite installation comportant d'une part, des moyens pour traiter lesdites cartouches d'encre selon une première (10) et une deuxième (28) étapes de broyage pour récupérer d'un côté lesdits éléments en matière plastique et d'un autre côté l'encre pulvérulente et les pièces mécaniques et d'autre part, des moyens pour récupérer (16, 18, 22), après la première étape de broyage, un premier broyat desdits éléments en matière plastique susceptible de contenir un résidu d'encre pulvérulente ; lesdits moyens pour traiter lesdites cartouches d'encre comprenant:
- des moyens (26, 28) pour broyer ledit premier broyat selon ladite deuxième étape de broyage de façon à former un second broyat contenant ledit résidu d'encre pulvérulente ;
- des moyens (34, 36) pour porter ledit second broyat à travers un courant gazeux de façon à séparer ledit second broyat dudit résidu d'encre pulvérulente, lesdits moyens pour porter ledit second broyat à travers un courant gazeux comprenant un conduit (36) orienté sensiblement verticalement et présentant une entrée supérieure située au-dessus d'une sortie inférieure (38), ledit conduit étant équipé de chicanes entre ladite entrée supérieure et ladite sortie inférieure, ledit second broyat étant introduit à travers ladite ouverture supérieure de façon à être entraîné verticalement par gravité vers ladite sortie inférieure, tandis que lesdites chicanes guident ledit second broyat alternativement selon des directions transversales, de façon à détacher ledit résidu d'encre pulvérulente dudit second broyat ; et,
- des moyens d'aspiration situés au-dessus de ladite entrée supérieure pour créer une dépression apte à provoquer la formation d'un courant d'air orienté de ladite sortie inférieure vers ladite ouverture supérieure, ledit courant d'air formant ledit courant gazeux.

9. Installation de recyclage selon la revendication 8, caractérisée en que le conduit équipé de chicanes comporte une succession de cylindres de forme parallélépipédique, et inclinés successivement les uns des autres d'un angle voisin de 120°.

10. Installation de recyclage selon la revendication 9, caractérisée en que le rapport de la longueur sur la largeur de la section droite des cylindres est inférieur ou égal à 3,5.

11. Installation de recyclage selon la revendication 10, caractérisée en que lesdits cylindres présentent une section droite rectangulaire, d'une longueur comprise entre 225 et 230 mm et d'une largeur comprise entre 70 et 80 mm.

12. Installation de recyclage selon l'une quelconque des revendications 8 à 11, **caractérisée en ce que** lesdits moyens pour traiter lesdites cartouches d'encre selon une première (10) étape de broyage comprennent deux arbres montés à rotation et à distance l'un de l'autre de façon sensiblement parallèle, lesdits arbres présentant respectivement une pluralité de dents formant couteaux, les dents des deux arbres étant adaptées à se croiser entre les arbres pour broyer lesdites cartouches d'encre lorsque lesdites cartouche d'encre sont entraînées entre lesdits arbres.

13. Installation de recyclage selon l'une quelconque des revendications 8 à 12, **caractérisée en ce que**, lesdites pièces mécaniques comportant des éléments métalliques, ladite installation comprend des moyens formant aimant pour extraire par aimantation lesdits éléments métalliques dudit premier broyat avant ladite seconde étape de broyage.

## Claims

1. A method for recycling ink cartridges for printing system, said ink cartridges comprising a casing, a tank to store pulverulent ink and mechanic parts, said casing and said tank including elements made of plastics, said method being of the type such that:
said ink cartridges are treated according to a first and a second crushing steps to recover on the one hand said plastics elements and on the other hand the pulverulent ink and the mechanic parts ; and,
after the first crushing step, a first ground material of said elements made of plastics likely to contain a pulverulent ink residue is recovered ;
said first ground material is crushed according to said second crushing step to provide a second ground material containing said pulverulent ink residue ;
**characterized in that** said second ground material is carried towards a raised area, said second ground material being vertically driven by gravity from said raised area towards a reception area, and said second ground material is alternatively guided along transversal directions, between said raised area and said reception area to separate said pulverulent ink residue from said second ground material, while said second ground material is carried through a gas flow directed at counter-current from said second ground material to separate said second ground material from said pulverulent ink residue.

2. The recycling method according to claim 1, **characterized in that** said second ground material is carried through a gas flow directed at counter-current from said second ground material between said reception area and said raised area.

3. The recycling method according to claim 1 or 2, **characterized in that** said gas flow is alternatively guided along transversal directions and along a direction opposed to that of said second ground material so as to cause the crossing of said second ground material flow and that of said gas flow.

4. The recycling method according to any of claims 1 to 3, **characterized in that** said mechanic parts include metallic elements representing between 2 and 10 % of the total weight of said ink cartridge.

5. The recycling method according to any of claims 1 to 4, **characterized in that** a vacuum is provided in said raised area to cause the formation of an air flow providing said gas flow.

6. The recycling method according to any of claims 1 to 5, **characterized in that** said treated ink cartridges are sieved after said first crushing step to recover said first ground material.

7. The recycling method according to any of claims 1 to 6, **characterized in that**, said mechanic parts comprising metallic elements, said metallic elements are extracted from said first ground material by magnetization effect before said second crushing step.

8. An installation for recycling ink cartridges for printing system, said ink cartridges comprising a casing, a tank to store pulverulent ink and mechanic parts, said casing and said tank including elements made of plastics, said installation comprising on the one hand, means intended to treat said ink cartridges according to a first (10) and a second (28) crushing steps to recover on one side said plastics elements and on the other side the pulverulent ink and mechanic parts and, on the other hand, means to recover (16, 18, 22), after the first crushing step, a first ground material of said plastics elements likely to contain a pulverulent ink residue; said means intended to treat said ink cartridges comprising :
- means (26, 28) to crush said first ground material according to said second crushing step in order to provide a second ground material containing said pulverulent ink residue;
- means (34, 36) to carry said second ground material through a gas flow in order to separate said second ground material from said pulverulent ink residue, said means to carry said second ground material through a gas flow comprising a pipe (36) directed substantially vertically and having a higher inlet located above a lower outlet (38), said conduit being provided with baffles between said higher inlet and said lower outlet, said second ground material being introduced through said higher opening in order to be vertically driven by gravity towards said lower outlet, while said baffles alternatively guide said second ground material along transversal directions, in order to separate said pulverulent ink residue from said second ground material; and,
- suction means located above said higher inlet to provide a vacuum ready to cause the formation of an air flow directed from said lower outlet towards said higher opening, said air flow providing said gas flow.

9. The recycling installation according to claim 8, **characterized in that** the pipe provided with baffles comprises a sequence of cylinders having a parallelepipedic form, and being successively inclined to each other at an angle of about 120°.

10. The recycling installation according to claim 9, **characterized in** the length to width ratio of the cylinders cross-section is lower than or equal to 3,5.

11. The recycling installation according to claim 10, **characterized in that** said cylinders has a rectangular cross-section having a length ranging between 225 and 230 mm and a width ranging between 70 and 80 mm.

12. The recycling installation according to any of claims 8 to 11, **characterized in that** said means intended to treat said ink cartridges according to a first (10) crushing step comprise two rotationally mounted shafts and arranged remotely the one to the other in a substantially parallel way, said shafts having a plurality of teeth forming respectively knives, the teeth of the two shafts being adapted to cross them between the shafts in order to crush said ink cartridges when said ink cartridges are driven between said shafts.

13. The recycling installation according to any of claims 8 to 12, **characterized in that**, said mechanic parts comprising metallic elements, said installation comprises magnet means intended to extract said metallic elements from said first ground material by magnetization effect before said second crushing step.

## Patentansprüche

1. Verfahren zum Recycling von Tintenpatronen für ein Drucksystem, wobei die Tintenpatronen ein Gehäuse, einen Behälter zum Aufbewahren von pulverförmiger Tinte und mechanische Teile umfassen, wobei das Gehäuse und der Behälter Elemente aus Kunststoff aufweisen, wobei gemäß dem Verfahren:
- die Tintenpatronen gemäß einem ersten und einem zweiten Zerkleinerungsschritt behandelt werden, um einerseits die Elemente aus Kunststoff und andererseits die pulverförmige Tinte und die mechanischen Teile zurückzugewinnen; und
- nach dem ersten Zerkleinerungsschritt ein erstes Zerkleinerungsprodukt aus den Elementen aus Kunststoff zurückgewonnen wird, das einen Rest pulverförmiger Tinte enthalten kann;
- das erste Zerkleinerungsprodukt gemäß dem zweiten Zerkleinerungsschritt zerkleinert wird, um ein zweites Zerkleinerungsprodukt zu bilden, das den Rest pulverförmiger Tinte enthält;
**dadurch gekennzeichnet, dass** das zweite Zerkleinerungsprodukt in Richtung eines oben liegenden Bereichs getragen wird, wobei das zweite Zerkleinerungsprodukt senkrecht mittels Schwerkraft von dem oben liegenden Bereich in Richtung eines Aufnahmebereichs mitgeführt wird und das zweite Zerkleinerungsprodukt zwischen dem oben liegenden Bereich und dem Aufnahmebereich abwechselnd in Querrichtungen geführt wird, um den Rest pulverförmiger Tinte von dem zweiten Zerkleinerungsprodukt zu lösen, während das zweite Zerkleinerungsprodukt durch einen Gasstrom getragen wird, der im Gegenstrom zu dem zweiten Zerkleinerungsprodukt gerichtet ist, um das zweite Zerkleinerungsprodukt von dem Rest pulverförmiger Tinte zu trennen.

2. Recyclingverfahren nach Anspruch 1, **dadurch gekennzeichnet, dass** das zweite Zerkleinerungsprodukt durch einen Gasstrom, der im Gegenstrom zum zweiten Zerkleinerungsprodukt zwischen dem Aufnahmebereich und dem oben liegenden Bereich ausgerichtet ist, getragen wird.

3. Recyclingverfahren nach Anspruch 1 oder 2, **dadurch gekennzeichnet, dass** der Gasstrom abwechselnd in Querrichtungen und in einer Richtung entgegengesetzt zum zweiten Zerkleinerungsprodukt geführt wird, um ein Queren des Stroms des zweiten Zerkleinerungsprodukts und des Gasstroms zu bewirken.

4. Recyclingverfahren nach einem der Ansprüche 1 bis 3, **dadurch gekennzeichnet, dass** die mechanischen Teile Metallelemente enthalten, die zwischen 2 und 10 % des Gesamtgewichts der Tintenpatrone ausmachen.

5. Recyclingverfahren nach einem der Ansprüche 1 bis 4, **dadurch gekennzeichnet, dass** ein Unterdruck in dem oben liegenden Bereich erzeugt wird, um die Entstehung eines Luftstroms zu bewirken, der den Gasstrom bildet.

6. Recyclingverfahren nach einem der Ansprüche 1 bis 5, **dadurch gekennzeichnet, dass** die behandelten Tintenpatronen nach dem ersten Zerkleinerungsschritt gesiebt werden, um das erste Zerkleinerungsprodukt zurückzugewinnen.

7. Recyclingverfahren nach einem der Ansprüche 1 bis 6, **dadurch gekennzeichnet, dass**, da die mechanischen Teile Metallelemente enthalten, durch Magnetisierung die Metallelemente vor dem zweiten Zerkleinerungsschritt von dem ersten Zerkleinerungsprodukt entfernt werden.

8. Vorrichtung zum Recycling von Tintenpatronen für ein Drucksystem, wobei die Tintenpatronen ein Gehäuse, einen Behälter zum Aufbewahren von pulverförmiger Tinte und mechanische Teile umfassen, wobei das Gehäuse und der Behälter Elemente aus Kunststoff aufweisen, wobei die Vorrichtung zum einen Mittel zum Behandeln der Tintenpatronen gemäß einem ersten (10) und einem zweiten (28) Zerkleinerungsschritt zum Rückgewinnen einerseits der Elemente aus Kunststoff und andererseits der pulverförmigen Tinte und der mechanischen Teile, und zum anderen Mittel zum Rückgewinnen (16, 18, 22), nach dem ersten Zerkleinerungsschritt, eines ersten Zerkleinerungsprodukts aus den Elementen aus Kunststoff, das einen Rest pulverförmiger Tinte enthalten kann, aufweist; wobei die Mittel zum Behandeln der Tintenpatronen Folgendes umfassen:
- Mittel (26, 28) zum Zerkleinern des ersten Zerkleinerungsprodukts gemäß dem zweiten Zerkleinerungsschritt, um ein zweites Zerkleinerungsprodukt zu bilden, das den Rest pulverförmiger Tinte enthält;
- Mittel (34, 36) zum Tragen des zweiten Zerkleinerungsprodukts durch einen Gasstrom, um das zweite Zerkleinerungsprodukt von dem Rest pulverförmiger Tinte zu trennen, wobei die Mittel zum Tragen des zweiten Zerkleinerungsprodukts durch einen Gasstrom einen Kanal (36) umfassen, der im Wesentlichen senkrecht ausgerichtet ist und einen oberen Einlass aufweist, der sich über einem unteren Auslass (38) befindet, wobei der Kanal mit Einbauten zwischen dem oberen Einlass und dem unteren Auslass ausgestattet ist, wobei das zweite Zerkleinerungsprodukt durch die obere Öffnung eingebracht wird, um senkrecht mittels Schwerkraft in Richtung des unteren Auslasses mitgeführt zu werden, während die Einbauten das zweite Zerkleinerungsprodukt abwechselnd in Querrichtungen führen, um den Rest pulverförmiger Tinte von dem zweiten Zerkleinerungsprodukt zu lösen; und
- Saugmittel, die sich über dem oberen Einlass befinden, um einen Unterdruck zu erzeugen, der in der Lage ist, die Entstehung eines Luftstroms zu bewirken, der von dem unteren Auslass in Richtung der oberen Öffnung gerichtet ist, wobei der Luftstrom den Gasstrom bildet.

9. Recyclingvorrichtung nach Anspruch 8, **dadurch gekennzeichnet, dass** der Kanal, der mit Einbauten ausgestattet ist, eine Abfolge von parallelepipedförmigen Zylindern aufweist, die nacheinander unter einem Winkel nahe 120 ° zueinander geneigt sind.

10. Recyclingvorrichtung nach Anspruch 9, **dadurch gekennzeichnet, dass** das Verhältnis der Länge zur Breite des Querschnitts der Zylinder unter oder gleich 3,5 beträgt.

11. Recyclingvorrichtung nach Anspruch 10, **dadurch gekennzeichnet, dass** die Zylinder einen rechteckigen Querschnitt aufweisen, mit einer Länge zwischen 225 und 230 mm und einer Breite zwischen 70 und 80 mm.

12. Recyclingvorrichtung nach einem der Ansprüche 8 bis 11, **dadurch gekennzeichnet, dass** die Mittel zum Behandeln der Tintenpatronen gemäß einem ersten (10) Zerkleinerungsschritt zwei Wellen umfassen, die drehend und in einem Abstand zueinander im Wesentlichen parallel montiert sind, wobei die Wellen jeweils eine Vielzahl von Zähnen aufweisen, die Messer bilden, wobei die Zähne der beiden Wellen ausgelegt sind, sich zwischen den Wellen zu kreuzen, um die Tintenpatronen zu zerkleinern, wenn die Tintenpatronen zwischen die Wellen mitgeführt werden.

13. Recyclingvorrichtung nach einem der Ansprüche 8 bis 12, **dadurch gekennzeichnet, dass**, da die mechanischen Teile Metallelemente enthalten, die Vorrichtung Mittel umfasst, die einen Magneten bilden, um durch Magnetisierung die Metallelemente vor dem zweiten Zerkleinerungsschritt von dem ersten Zerkleinerungsprodukt zu entfernen.
